# EUROPÄISCHE PATENTSCHRIFT

(11) **EP 2 518 935 B1**
(45) Veröffentlichungstag und Bekanntmachung des Hinweises auf die Patenterteilung: **08.01.2014**
(21) Anmeldenummer: 11164313.6
(22) Anmeldetag: 29.04.2011
(51) Int. Cl.: H04L 12/12, H04L 12/10, H04L 12/40, H04L 12/26, G06F 1/32

(54) **Wake on LAN-Modul**
Wake on LAN module
Module Wake-on-LAN

(43) Veröffentlichungstag der Anmeldung: 31.10.2012
(73) Patentinhaber: Siemens Aktiengesellschaft, 80333 München (DE)
(72) Erfinder: Krüger, Jörg, 76870 Kandel (DE); Wagner, Michael, 76764 Rheinzabern (DE)

(56) Entgegenhaltungen:
- DE-A1-102004 039 808
- US-A1- 2003 028 677
- "TRANSPARENT POWER-ON CONTROL OF TOKEN RING AND TOKEN BUS FILE SERVER COMPUTERS", IBM TECHNICAL DISCLOSURE BULLETIN, INTERNATIONAL BUSINESS MACHINES CORP. (THORNWOOD), US, Bd. 38, Nr. 3, 1. März 1995 (1995-03-01), Seite 55/56, XP000507976, ISSN: 0018-8689

## Beschreibung

Die Erfindung betrifft ein Modul für eine modulare Automatisierungseinheit eines Automatisierungsnetzwerks, eine Automatisierungseinheit, ein Verfahren zur Steuerung einer modularen Automatisierungseinheit in einem Automatisierungsnetzwerk, ein Verfahren zur Steuerung einer Automatisierungseinheit eines Automatisierungsnetzwerks sowie ein Computerprogrammprodukt.

Aus dem Stand der Technik sind Automatisierungsnetzwerke mit Automatisierungseinheiten bekannt. Ein Nachteil bekannter Automatisierungseinheiten ist, dass diese üblicherweise Powermanagement, d.h. Energiesparmethoden, nur unzureichend oder überhaupt nicht unterstützen, insbesondere nicht im Hinblick auf Wake on LAN (WOL). Bisher mussten, um Wake on LAN nutzen zu können, sowohl das verwendete Grundgerät, als auch die hierzu verwendete Netzwerkkomponente WOL nativ unterstützen. Dies ist jedoch bei vielen Automatisierungseinheiten nicht der Fall. Entsprechend ist es bisher vielfach nicht möglich, Wake on LAN (WOL) in Verbindung mit diesen Automatisierungseinheiten zu nutzen.

Die DE 10 2004 039 808 A1 beschreibt eine Vorrichtung, insbesondere eine Einbaukarte für eine Datenverarbeitungseinrichtung, beispielsweise für einen Computer, einen Drucker oder dergleichen, wobei die Datenverarbeitungseinrichtung mit mindestens einer weiteren Datenverarbeitungseinrichtung datentechnisch vernetzt ist und wobei die Datenverarbeitungseinrichtung eine Hauptplatine mit Schnittstellen für weitere Komponenten der Datenverarbeitungseinrichtung und/oder zur Interaktion der Datenverarbeitungseinrichtung mit einem Benutzer aufweist einschließlich einer Schnittstelle zum Senden und/oder Empfangen von Daten zu oder von einem Peripheriegerät der Datenverarbeitungseinrichtung und wobei die Vorrichtung über ein Netzwerk mit einem Controller verbunden ist. Die Vorrichtung weist eine von der Datenverarbeitungseinrichtung unabhängige Energieversorgung über das Netzwerk auf und ist mit mindestens einer der Schnittstellen zum Senden und/oder Empfangen von Daten zu oder von einem Peripheriegerät der Datenverarbeitungseinrichtung verbunden ist.

Die US 2003/028677 A1 beschreibt ein Netzwerk-Steuer-System, ein Netzwerk-Gerät, einen Repeaterund ein Verbindungsgerät. Das Netzwerk-Steuer-System beinhaltet ein Verwaltungsgerät, separate Geräte, die mit dem Verwaltungsgerät kommunizieren und einen Repeater, der die separaten Geräte mit dem Verwaltungsgerät verbindet.

Die Veröffentlichung "TRANSPARENT POWER-ON CONTROL OF TOKEN RING AND TOKEN BUS FILE SERVER COMPUTERS", IBM TECHNICAL DISCLOSURE BULLETIN, INTERNATIONAL BUSINESS MACHINES CORP. (THORNWOOD), US, Bd. 38, Nr. 3, 1. März 1995 (1995-03-01), Seite 55/56, XP000507976, ISSN: 0018-8689 beschreibt eine Architektur-Implementierung, die es entfernten File-Server-Computern ermöglicht, sich einzuschalten, wenn sie adressiert werden.

Demgegenüber liegt der Erfindung die Aufgabe zugrunde, ein Modul für eine modulare Automatisierungseinheit eines Automatisierungsnetzwerks, eine Automatisierungseinheit, ein Verfahren zur Steuerung einer modularen Automatisierungseinheit, Verfahren zur Steuerung eines Automatisierungssystems eines Automatisierungsnetzwerks sowie ein Computerprogrammprodukt zu schaffen.

Die der Erfindung zugrunde liegenden Aufgaben werden jeweils mit den Merkmalen der unabhängigen Patentansprüche gelöst. Ausführungsformen der Erfindung sind in den abhängigen Patentansprüchen angegeben.

Es wird ein Modul für eine modulare Automatisierungseinheit eines Automatisierungsnetzwerks geschaffen, wobei das Modul einen Netzwerkanschluss aufweist, wobei der Netzwerkanschluss zum Empfang eines Wake on LAN-Schaltsignals über das Automatisierungsnetzwerk ausgebildet ist, wobei das Modul dazu ausgebildet ist, als Antwort auf den Empfang des Wake on LAN-Schaltsignals die Automatisierungseinheit von einem Energiesparzustand in einen Betriebszustand zu schalten, wobei die Automatisierungseinheit im Energiesparzustand weniger elektrische Energie verbraucht als im Betriebszustand.

Die Erfindung geht dabei von der Erkenntnis aus, dass bereits viele Automatisierungseinheiten, die eine verteilte Automatisierung unterstützen, eine Modularität aufweisen, die es erlaubt, additive Schnittstellen oder Module in das Betriebssystem einzubringen. Würde nun eine bestehende Automatisierungseinheit so modifiziert werden, dass eine Wake on LAN-Funktion bereits im Grundgerät realisiert wäre, so würde dies zusätzliche Systembestandteile erfordern, welche das Grundgerät teurer und aufwendiger werden lassen. Würde eine vorgeschaltete Komponente außerhalb des Grundgeräts verwendet werden, so müsste diese eine entsprechende Intelligenz aufweisen, welche diese Netzwerkkomponente in die Lage versetzen würde, vollkommen autonom von der nachgeschalteten Automatisierungseinheit Wake on LAN-Schaltsignale zu verarbeiten und entsprechende Steuersignale an nachgeschalteten Ausgängen bereitzustellen. Auch dies würde wiederum eine solche Lösung teuer und aufwendig machen.

Die modulare Automatisierungseinheit kann beispielweise als modulare Steuerung, z.B. als sogenannte Speicherprogrammierbare Steuerung (SPS), ausgebildet und eingerichtet sein. Dabei kann das Modul dann beispielsweise als Zentrale Steuerungseinheit oder auch als Kommunikationsmodul für eine solche modulare Steuerung ausgebildet und/oder eingerichtet sein. Weiterhin kann die modulare Automatisierungseinheit auch als ein modularer Netzwerkknoten, insbesondere für ein Automatisierungnetzwerk, ausgebildet und eingerichtet sein, wie z.B. ein modularer sogenannter "Switch", ein modularer sogenannter Router" oder eine modulare sogenannte "Bridge". In diesem Fall kann das Modul beispielsweise als Funktions-, Anschluss- und/oder Port-Modul für einen solchen NetzwerkKnoten ausgebildet und/oder eingerichtet sein.

Ausführungsformen der vorliegenden Erfindung haben hingegen den Vorteil, dass aufgrund der Verwendung eines WOL Moduls für die modulare Automatisierungseinheit dieses Modul lediglich mit der Automatisierungseinheit verbunden werden muss, woraufhin das Modul in das System des Grundgeräts unter Verwendung entsprechender Treiber (Firmware oder Software eingebunden wird. Das Modul ist damit quasi Bestandteil der modularen Automatisierungseinheit, verfügt jedoch dennoch über eine ausreichend hohe Intelligenz, um bei Empfang eines Wake on LAN-Schaltsignals die Automatisierungseinheit vom Energiesparzustand in den Betriebszustand zu schalten.

Damit müssen bestehende modulare Automatisierungseinheiten, welche inkompatibel zu Wake on LAN sind, nicht modifiziert werden, sondern können nachträglich modular für Power-Management und Wake on LAN aufgerüstet werden. Ein entsprechendes Wake on LAN-Modul müsste lediglich z.B. durch eine Firmwareänderung auf Seiten des Grundgeräts/oder durch eine entsprechende Gerätetreiberinstallation auf Seiten des Grundgeräts an dieses angebunden werden. Die Hardware des Grundgerätes wird dadurch nicht verändert.

Damit kann beispielsweise folgendes Szenario realisiert werden:
Zunächst schaltet sich die Automatisierungseinheit aufgrund eines vordefinierten Ereignisses selbständig in den Energiesparzustand. In diesen Vorgang ist das Wake on LAN-Modul vorzugsweise selbst nicht involviert. Erst im Anschluss daran überwacht das Wake on LAN-Modul aktiv den Verkehr von Datenpaketen an seiner Netzwerk-Schnittstelle zum Automatisierungsnetzwerk. Nach Empfang eines Wake on LAN-Schaltsignals schaltet das Wake on LAN-Modul als Antwort auf diesen Empfang die Automatisierungseinheit wiederum von dem aktuellen Energiesparzustand in einen Betriebszustand um.

Nach einer Ausführungsform der Erfindung ist das Modul dazu ausgebildet, die Automatisierungseinheit von dem Energiesparzustand in den Betriebszustand durch Steuerung der Spannungsversorgung der Automatisierungseinheit zu schalten. Denkbar ist beispielsweise hier die Schaltung einer Bestromung der für den Betrieb der Automatisierungseinheit notwendigen Netzteile. Alternativ oder zusätzlich ist es jedoch auch möglich, die Automatisierungseinheit so anzusteuern, dass ein selbständiges Hochfahren der Automatisierungseinheit vom Energiesparzustand in den Betriebszustand erfolgt. Dies kann beispielsweise durch Übermittlung eines Schaltsignals an eine Komponente eines Netzteils der Automatisierungseinheit erfolgen. Im letzteren Fall findet somit zwar im Energiesparzustand eine Bestromung eines Teils der Automatisierungseinheit (nämlich einer Komponente des Netzteils) statt. Jedoch verbraucht in diesem Fall nichtsdestotrotz die Automatisierungseinheit im Energiesparzustand weniger elektrische Energie als im Betriebszustand.

Nach einer weiteren Ausführungsform der Erfindung handelt es sich bei dem Wake on LAN-Schaltsignal um ein vordefiniertes Signal, welches entweder speziell an das Automatisierungsgerät adressiert ist oder welches als Broadcast empfangen wird. Dies ermöglicht also entweder ein gezieltes Einschalten von einzelnen Automatisierungseinheiten oder aber ein globales Hochfahren" eines kompletten Automatisierungssystems, welches mehrere einzelne Automatisierungseinheiten umfasst.

Nach einer weiteren Ausführungsform der Erfindung ist das Modul dazu ausgebildet, im Energiesparzustand ausschließlich über das Netzwerk mit elektrischer Energie versorgt und betrieben zu werden. Befindet sich also die Automatisierungseinheit im Energiesparzustand, wird von der Automatisierungseinheit selbst keinerlei Energie zum Betrieb des Moduls benötigt. Das Modul wird vollkommen autark von dem Automatisierungsnetzwerk über die Netzwerk-Schnittstelle mit elektrischer Energie versorgt und betrieben. Dies ermöglicht sogar, die Automatisierungseinheit vollständig im Energiesparzustand von jeglicher elektrischer Spannungsversorgung abzutrennen. Dies hat außerdem außer einem Energieeinspareffekt auch noch zusätzlich die Wirkung, dass im Energiesparzustand die Automatisierungseinheit zuverlässig gegen Überspannungen geschützt ist.

Nach einer weiteren Ausführungsform der Erfindung ist das Modul ferner dazu ausgebildet, im Betriebszustand der Automatisierungseinheit über das Automatisierungsnetzwerk empfangene Datenpakete direkt an die Automatisierungseinheit weiterzuleiten. Es erfolgt lediglich eine permanente Analyse bezüglich des Vorliegens von WOL Datenpaketen.

Im Betriebszustand und Energiesparzustand der Automatisierungseinheit kommen damit dem Modul außer der permanenten Analyse bezüglich des Vorliegens von WOL Datenpaketen keinerlei Datenverarbeitungsaufgaben zu. Insofern können die Datenverarbeitungsfähigkeiten auf Seiten des Wake on LAN-Moduls minimiert gehalten werden, was wiederum mehrere Vorteile hat:
Zum einen minimieren sich dadurch entsprechende Fertigungskosten von Modulen, da die Intelligenz der Module minimiert werden kann.

Zum zweiten erscheint das WOL Modul gegenüber dem Grundgerät lediglich als Standart-Netzwerkschnittstelle (z.B. RJ45), so dass Grundgeräte von modularen Automatisierungseinheiten unverändert beibehalten werden können, da diese wie in bisher üblicher Weise Datenpakete über Netzwerk-Schnittstellen empfangen. Der einzige Unterschied ist hier, dass anstatt einer reinen Netzwerk-Schnittstelle nun eine Schnittstelle in Form eines Wake on LAN-Moduls zum Einsatz kommt, wobei dieses Wake on LAN-Modul im Standardbetrieb gegenüber der Automatisierungseinheit keinerlei Unterschied zu einer sonst üblicherweise verwendeten Netzwerk-Schnittstelle aufweist.

Ein dritter Vorteil ist, dass sämtliche Datenverarbeitungsvorgänge ausschließlich außerhalb des Wake on LAN-Moduls, zum Beispiel im Grundgerät der Automatisierungseinheit, durchgeführt werden, wodurch die Anforderungen an die Leistungsfähigkeit in Bezug auf Datenverarbeitungsoperationen des Wake on LAN-Moduls minimiert werden können. Damit erfüllt das Wake on LAN-Modul automatisch zum Beispiel Echtzeitanforderungen, da auf Datenverarbeitungsvorgänge bewusst verzichtet wird und das Modul lediglich empfangene Datenpakete ohne Zeitverzögerung automatisch an das Grundgerät der Automatisierungseinheit weiterleitet.

In einem weiteren Aspekt betrifft die Erfindung eine Automatisierungseinheit eines Automatisierungsnetzwerks, wobei es sich bei der Automatisierungseinheit um ein modulares Gerät handelt, wobei die Automatisierungseinheit Wake on LAN-inkompatibel ist, wobei die Automatisierungseinheit zum Anschluss eines Moduls wie obig beschrieben ausgebildet ist.

Die besagte Automatisierungseinheit ist Wake on LAN-inkompatibel, d.h. sie weist keine hardwareseitige Unterstützung für Wake on LAN auf. Wie bereits oben ausführlich diskutiert, ermöglicht die Verwendung eines speziellen Wake on LAN-Moduls, welches modular mit dem entsprechenden Grundgerät der Automatisierungseinheit verbunden wird, dass Powermanagement ohne finanziell und strukturell hohe Modifikationen des Grundgeräts implementiert werden kann.

Nach einer weiteren Ausführungsform der Erfindung ist die Automatisierungseinheit dazu ausgebildet, über das Modul empfangene Datenpakete zu verarbeiten, wobei die Automatisierungseinheit dazu ausgebildet ist, im Fall dessen eines der empfangenen Datenpakete ein Schlaf-Schaltsignal aufweist, sich als Reaktion auf den Empfang dieses Schlaf-Schaltsignals selbst in den Energiesparzustand zu versetzen.

In anderen Worten wird also die Überführung der Automatisierungseinheit vom Betriebszustand in den Energiesparzustand nicht dem Wake on LAN-Modul überlassen, sondern das Wake on LAN-Modul leitet lediglich empfangene Datenpakete unverarbeitet an die Automatisierungseinheit selbst weiter. Da die Automatisierungseinheit üblicherweise Komponenten aufweist, mittels welcher sie in der Lage ist, empfangene Datenpakete zu analysieren und zu verarbeiten, ist eine gängige Automatisierungseinheit auch dazu in der Lage, ein entsprechendes empfangenes Schlaf-Schaltsignal zu erkennen und sich darauf selbständig in den Energiesparzustand zu versetzen. Im einfachsten Fall entspricht dieses Versetzen in den Energiesparzustand einem vollständigen (selbständigen) Herunterfahren der Automatisierungseinheit. Während dann die Automatisierungseinheit den Zustand "ausgeschaltet" aufweist, wird das Wake on LAN-Modul nachwievor über das Netzwerk mit elektrischer Energie versorgt und ist dadurch in der Lage, bei Empfang eines Wake on LAN-Schaltsignals die Automatisierungseinheit wieder in den Betriebszustand hochzufahren.

Allerdings sei darauf verwiesen, dass sich Energiesparzustand nicht ausschließlich auf ein vollständiges Herunterfahren der Automatisierungseinheit beschränkt. Beispielsweise ist es auch möglich, dass als Energiesparzustand ein Standby"-Modus oder ein "Hibernation"-Modus verwendet wird.

Nach einer weiteren Ausführungsform der Erfindung ist die Automatisierungseinheit ferner dazu ausgebildet, sich selbst in den Energiesparzustand zu versetzen, wenn innerhalb eines vordefinierten Zeitraums keine vordefinierten Datenpakete durch die Automatisierungseinheit empfangen wurden. Als "vordefinierte Datenpakete" werden hierbei Datenpakete in Bezug auf Art und Inhalt der Datenpakete verstanden. Beispielsweise kann festgelegt werden, dass wenn innerhalb eines vordefinierten Zeitraums keine Datenpakete mit Nutzdaten für die Automatisierungseinheit empfangen werden, sich die Automatisierungseinheit selbständig in den Energiesparzustand versetzt. Möglich ist es auch, dass es sich bei den Datenpaketen um spezielle ICMP (Internet Control Message Protocol) Pakete handelt, aufgrund deren Empfang die Automatisierungseinheit ableitet, dass ein Automatisierungsnetzwerk, an welches die Automatisierungseinheit angeschlossen ist, aktiv ist.

In einem weiteren Aspekt betrifft die Erfindung ein Verfahren zur Steuerung einer modularen Automatisierungseinheit in einem Automatisierungsnetzwerk über ein Modul der Automatisierungseinheit, wobei das Modul einen Netzwerkanschluss aufweist, wobei das Modul die Schritte ausführt:
- Empfang eines Wake on LAN-Schaltsignals am Netzwerkanschluss über das Automatisierungsnetzwerk,
- als Antwort auf den Empfang des Wake on LAN-Schaltsignals, Schalten der Automatisierungseinheit von einem Energiesparzustand in einen Betriebszustand, wobei die Automatisierungseinheit im Energiesparzustand weniger elektrische Energie verbraucht als im Betriebszustand.

In einem weiteren Aspekt betrifft die Erfindung ein Verfahren zur Steuerung einer Automatisierungseinheit eines Automatisierungsnetzwerks, wobei es sich bei der Automatisierungseinheit um ein modulares Gerät handelt, wobei die Automatisierungseinheit Wake on LAN-inkompatibel ist, wobei die Automatisierungseinheit ein Modul aufweist und das Modul die Schritte, wie obig beschrieben, durchführt.

In einem weiteren Aspekt betrifft die Erfindung ein Computerprogrammprodukt mit von einem Prozessor ausführbaren Instruktionen zur Durchführung der obig beschriebenen Verfahrensschritte.

Im Folgenden werden bevorzugte Ausführungsformen anhand der Zeichnungen näher erläutert. Es zeigen:
- Figur 1: ein Automatisierungsnetzwerk mit Automatisierungs-einheiten,
- Figur 2: ein Flussdiagramm eines Verfahrens zum Schalten ei-ner Automatisierungseinheit zwischen einem Energie-sparzustand und einem Betriebszustand,
- Figur 3: eine modulare Automatisierungseinheit mit einem Wa-ke on LAN-Modul,
- Figur 4: eine modulare Automatisierungseinheit mit einem Wa-ke on LAN-Modul.

Im Folgenden werden ähnliche Elemente mit denselben Bezugszeichen gekennzeichnet.

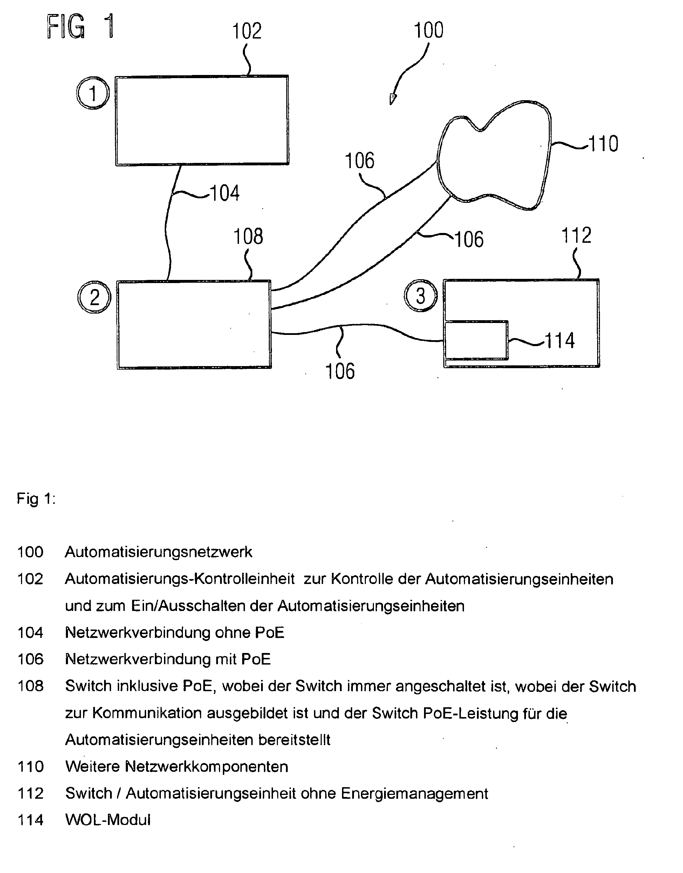

Die Figur 1 zeigt ein Automatisierungssystem 100 mit mehreren Automatisierungseinheiten 110 und 112. Diese Automatisierungseinheiten 110 und 112 sind über Netzwerkverbindungen 106 an einen Switch 108 angeschlossen. Der Switch 108 ist wiederum über eine Netzwerkverbindung 104 mit einer Kontrolleinheit 102 verbunden.

Die Kontrolleinheit 102 dient zur Kontrolle der Automatisierungseinheiten 110 und 112, und damit zur Steuerung und Kontrolle des Automatisierungsnetzwerks 100. Zu diesem Zweck sendet die Kontrolleinheit 102 entsprechende Steuersignale über die Netzwerkverbindung 104 an den Switch 108, welcher daraufhin diese Steuersignale an die jeweilige Automatisierungseinheit 110 bzw. 112 über die zugeordneten Netzwerkverbindungen 106 weiterleitet.

Im Folgenden sei ohne Beschränkung der Allgemeinheit lediglich die Automatisierungseinheit 112 betrachtet. Diese kann bezüglich des nun beschriebenen Aufbaus und Verfahren identisch oder ähnlich sein zu den Automatisierungseinheiten 110.

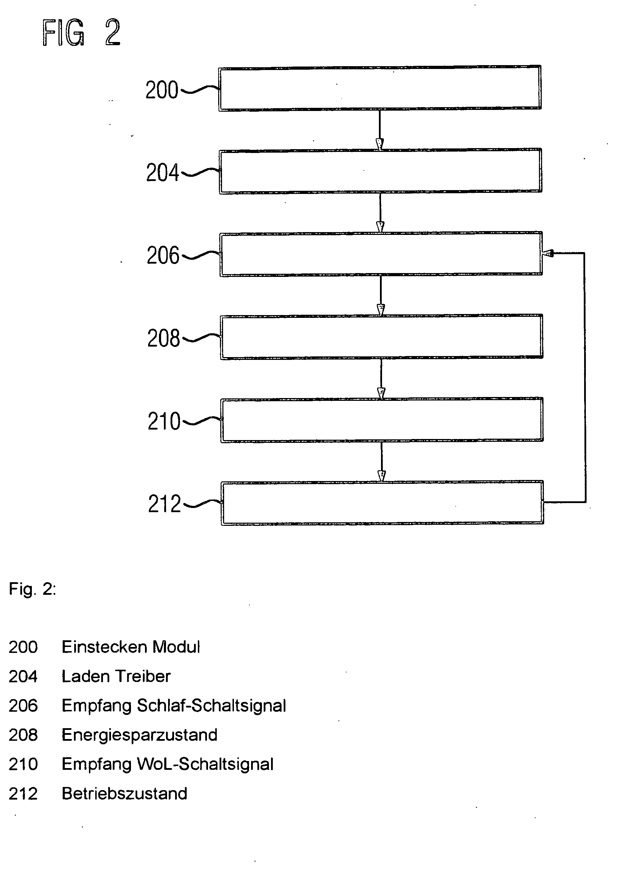

Bei der Automatisierungseinheit 112 handelt es sich um eine modulare Automatisierungseinheit, welche Wake on LAN-inkompatibel ist. Die modulare Automatisierungseinheit 112 ist zur Aufnahme verschiedener Arten von Modulen ausgebildet. In der in Figur 1 gezeigten Ausführungsform weist die Automatisierungseinheit 112 ein Wake on LAN-Modul 114 auf. Dieses wird in einem initialen Schritt 200 (vgl. Verfahrensschritte Figur 2) in die Automatisierungseinheit eingesteckt. Dies führt in Schritt 204 dazu, dass das Wake on LAN-Modul 114 von der Firmware der Automatisierungseinheit 112 erkannt wird. Möglich ist jedoch auch die Verwendung von Softwaretreibern.

Die Kontrolleinheit 102 ist mit dem Switch 108 über eine "normale" Ethernetverbindung 104 verbunden, d.h. eine Ethernetverbindung ohne die Möglichkeit, hierüber eine Bestromung des Switches 108 zu realisieren. Im Gegensatz hierzu handelt es sich bei den Netzwerkverbindungen 106 um Ethernetverbindungen zwischen dem Switch 108 und den Automatisierungseinheiten 110 bzw. 112, welche Ethernetverbindungen in Verbindung mit integrierter Stromversorgung umfassen. Diese Stromversorgung ist auch unter den Begriff Power over Ethernet, PoE" bekannt. Dies ermöglicht die Durchführung des folgenden Verfahrens:
In Schritt 206 wird zunächst ein Schlaf-Schaltsignal von der Kontrolleinheit 102 über den Switch 108 an die Automatisierungseinheit 112 gesendet. Die Automatisierungseinheit empfängt dieses Schlaf-Schaltsignal über seine Netzwerk-Schnittstelle, welche durch das Wake on LAN-Modul 114 gebildet wird. Als Antwort darauf versetzt sich die Automatisierungseinheit 112 selbständig in einen Energiesparzustand (vgl. Schritt 208).

Wünscht nun die Kontrolleinheit 102, dass die Automatisierungseinheit 112 wiederum in den Betriebszustand geschaltet wird, so sendet die Kontrolleinheit 102 über den Switch 108, welcher ständig aktiv ist, ein Wake on LAN-Schaltsignal an die Automatisierungseinheit 112 und damit an das Wake on LAN-Modul 114. Das Wake on LAN-Modul wird unter Verwendung der Power over Ethernet-Verbindung 106 mit elektrischer Energie versorgt, sodass dieses Modul 114 in der Lage ist, das empfangene WOL-Signal zu empfangen und richtig zu interpretieren (Schritt 210).

Als Antwort darauf schaltet das Wake on LAN-Modul 114 wiederum die Automatisierungseinheit 112 in den Betriebszustand (Schritt 212).

Ab diesem Zeitpunkt übernimmt die Automatisierungseinheit 112 wieder die vollständige Überwachung des Netzwerkverkehrs, welcher an der Netzwerk-Schnittstelle des WOL-Moduls 114 anliegt.

Während den Verfahrensschritten 208 bis 212 bleibt das WOL-Modul 114 permanent über den Switch 108 mit Spannung versorgt. Sobald die Kontrolleinheit 102 wieder Daten zur Automatisierungseinheit 112 übertragen möchte, sendet sie ein spezielles "Wake on LAN-Telegramm". Das WOL-Modul 114 ist selbständig in der Lage, dieses spezielle Telegramm zu erkennen, und schaltet nach Erkennen des Telegramms die Energieversorgung der gesamten Automatisierungseinheit 112 wieder ein.

Allerdings sei angemerkt, dass es auch möglich ist, dass sich die Automatisierungseinheit 112 selbständig in den Energiesparzustand versetzt, wenn zum Beispiel längere Zeit keine Kommunikationen mehr von der Kontrolleinheit 102 an die Automatisierungseinheit 112 stattgefunden hat. Dabei ist das Szenario denkbar, dass ohne weitere Benachrichtigung der an die Kontrolleinheit 102 angeschlossenen Automatisierungseinheiten 110 bzw. 112 die Automatisierungseinheit 102 abgeschaltet wird: Wenn z.B. die Automatisierungseinheiten 110 bzw. 112 keine Signale mehr von der Kontrolleinheit 102 empfangen würden, könnten sich die Automatisierungseinheiten 110 und 112 selbständig in den Energiesparzustand versetzen. Ein Kriterium könnte hierbei sein, dass innerhalb eines vordefinierten Zeitraums keine weiteren Datenpakete von der Kontrolleinheit 102 empfangen wurden. In diesem Fall wären dann sowohl die Kontrolleinheit 102 als auch die Automatisierungseinheiten 110 und 112 abgeschaltet bzw. in einem Energiesparzustand. Ausschließlich der Switch 108 würde ständig in Betrieb sein und dabei die WOL-Module 114 an den Automatisierungseinheiten mit Strom versorgen.

Wenn die Kontrolleinheit 102 wieder eingeschaltet wird, könnte diese einen WOL-Befehl an die WOL-Module der Automatisierungseinheiten 110 bzw. 112 senden, was zufolge hätte, dass die Automatisierungseinheiten 110 und 112 wieder vom Energiesparzustand in den Betriebszustand geschaltet werden würden.

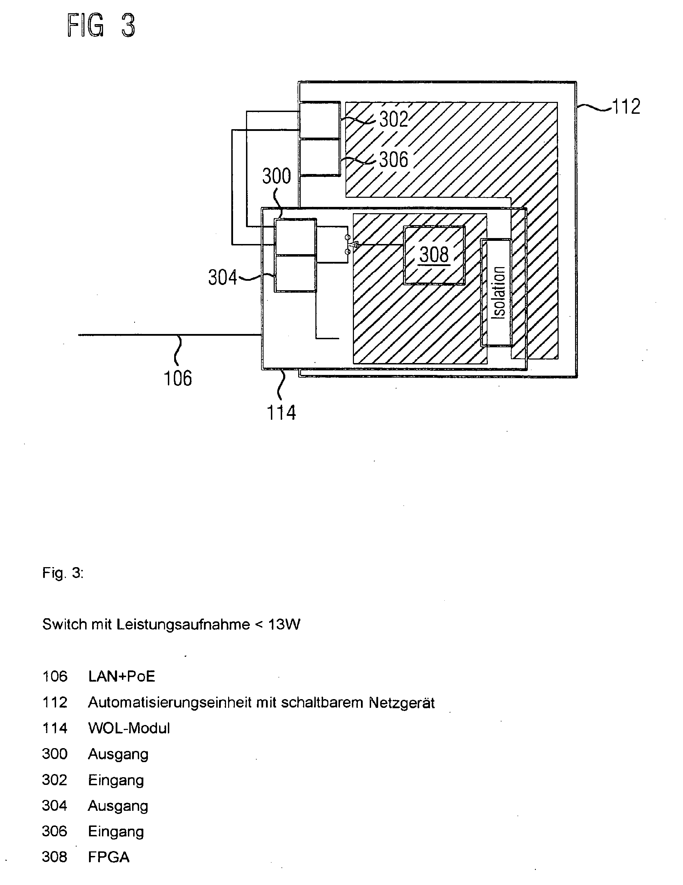

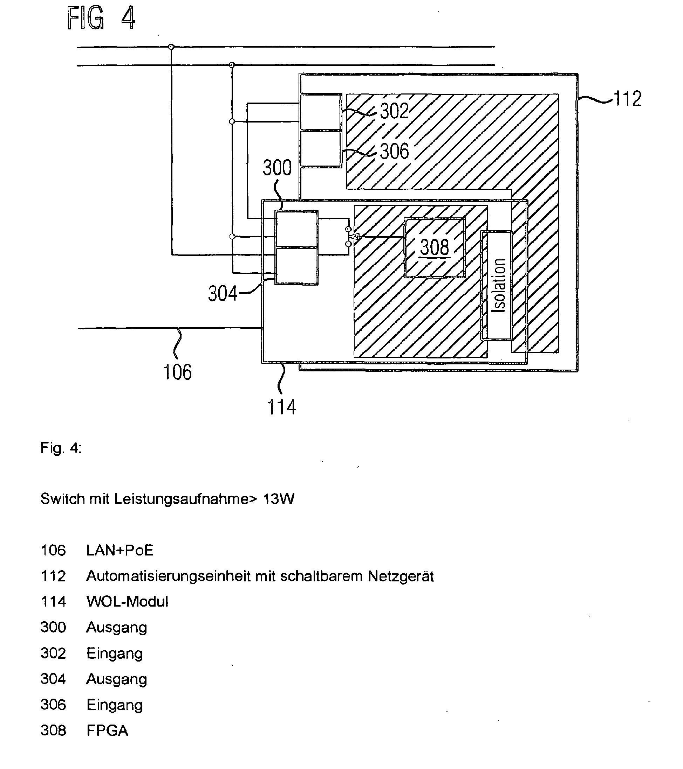

Die Figuren 3 und 4 zeigen verschiedene Automatisierungseinheiten 112 mit eingesteckten WOL-Modulen 114. Die in den Figuren 3 und 4 gezeigten Automatisierungseinheiten unterscheiden sich darin, dass die in Figur 3 gezeigte Automatisierungseinheit eine sehr geringe Leistungsaufnahme aufweist, beispielsweise kleiner als 13 Watt, sodass im Betriebszustand eine vollständige Spannungsversorgung des Grundgerätes über die Netzwerkverbindung 106, d.h. über Power over Ethernet, stattfinden kann. Auf ein externes Netzteil kann somit in Fig. 3 verzichtet werden.

Im Gegensatz hierzu weist die Automatisierungseinheit 112 der Figur 4 eine Leistungsaufnahme größer als 13 Watt auf, sodass hierzu eine externe Spannungsversorgung notwendig ist.

Sowohl im Betriebszustand als auch im Energiesparzustand empfängt in Fig. 3 das WOL-Modul 114 über die PoE-Ethernetverbindung 116 eine elektrische Spannung. Über einen Ausgang 300 ist nun das Modul 114 mit einem Eingang 302 der Automatisierungseinheit verbunden, wobei der Eingang 302 der Automatisierungseinheit ein Spannungseingang der Automatisierungseinheit ist. Im Energiesparzustand ist die Automatisierungseinheit 112 abgespaltet, d.h. eine Leistungsübertragung über die Verbindung 300 - 302 findet nicht statt. Wenn jedoch das WOL-Modul einen WOL-Schaltbefehl über die Netzwerkverbindung 106 empfängt, so schaltet beispielsweise ein FPGA (Field Programmable Gate Array) 308 die Spannungsversorgung am Ausgang 300 frei, sodass nun eine Bestromung des Eingangs 302 der Automatisierungseinheit stattfindet. Die Automatisierungseinheit wird daraufhin in den Betriebszustand hochgefahren. Im Betriebszustand erfolgt dann die Bestromung der Automatisierungseinheit 112 über die Aus-/Eingänge 300 und 302 und damit über PoE und die Netzwerkverbindung 106.

Im Falle einer erhöhten Leistungsaufnahme wird, wie in Figur 4 gezeigt, dieses Verfahren jedoch abgewandelt:
In der in Figur 4 gezeigten Ausführungsform erfolgt eine Spannungsversorgung der Automatisierungseinheit grundsätzlich über das Wake on LAN-Modul 114. Im Betriebszustand wird also die externe Spannungsversorgung für die Automatisierungseinheit durch das Wake on LAN-Modul 114 durchgeschleift. Zu diesem Zweck weist das Wake on LAN-Modul 114 Eingänge 304 auf, in welche die externe Spannungsversorgung, zum Beispiel 24 V, eingespeist wird. Über den FPGA 308 wird Eingang 304 auf Ausgang 300 durchgeschaltet, wobei wiederum an Ausgang 300 der Spannungseingang 302 der Automatisierungseinheit angeschlossen ist. Damit erhält im Betriebszustand die Automatisierungseinheit 112 die Spannung 24 V über das Wake on LAN-Modul 114.

Im Energiesparzustand wird der Eingang 304 vom Ausgang 300 getrennt, sodass keine Energieversorgung der Automatisierungseinheit 112 mehr stattfindet. Erst dann wenn ein WOL-Befehl über die Ethernetverbindung 106 durch das WOL-Modul 114 empfangen wird, erkennt dies das Modul 114, sodass daraufhin der FPGA 308 den Spannungseingang 304 auf den Ausgang 300 schaltet. Damit erfolgt wiederum eine Bestromung des Eingangs 302 der Automatisierungseinheit, wodurch diese wiederum in den Betriebszustand versetzt wird.

Alternativ zu der in Figur 4 gezeigten Ausführungsform ist es auch möglich, dass über den Ausgang 300 lediglich ein Relais der Automatisierungseinheit 112 geschaltet wird. Der Ausgang 300 dient also lediglich zur Bereitstellung einer Steuerspannung des Relais. Der Laststromkreis des Relais hingegen ist mit einer externen Stromversorgung verbunden, welche einen geeigneten Wert, zum Beispiel 24 V oder auch 230 V, aufweisen kann.

In den Figuren 3 und 4 sind das Wake on LAN-Modul und die Automatisierungseinheit so voneinander elektrisch isoliert, dass im Energiesparzustand das elektrische Potenzial der Automatisierungseinheit aufgrund der Bestromung des Wake on LAN-Moduls 114 nicht merklich angehoben wird.

## Patentansprüche

1. Modul (114) für eine modulare Automatisierungseinheit (110; 112) eines Automatisierungsnetzwerkes (100), wobei das Modul (114) einen Netzwerkanschluss aufweist, wobei der Netzwerkanschluss zum Empfang eines Wake on LAN Schaltsignals über das Automatisierungsnetzwerk ausgebildet ist, wobei das Modul (114) dazu ausgebildet ist, als Antwort auf den Empfang des Wake on LAN Schaltsignals die Automatisierungseinheit (110; 112) von einem Energiesparzustand in einen Betriebszustand zu schalten, wobei die Automatisierungseinheit (110; 112) im Energiesparzustand weniger elektrische Energie verbraucht als im Betriebszustand, **dadurch gekennzeichnet, dass** die modulare Automatisierungseinheit (110; 112) dazu ausgebildet ist, sich zuvor selbständig in den Energiesparzustand zu schalten.

2. Modul (114) nach Anspruch 1, wobei das Modul (114) dazu ausgebildet ist, die Automatisierungseinheit (110; 112) von dem Energiesparzustand in den Betriebszustand durch Steuerung der Spannungsversorgung der Automatisierungseinheit (110; 112) zu schalten.

3. Modul (114) nach Anspruch 1, wobei es sich bei dem Wake on LAN Schaltsignal um ein vordefiniertes Signal handelt, welches entweder speziell an das Automatisierungsgerät adressiert ist oder welches als Broadcast empfangen wird.

4. Modul (114) nach Anspruch 1, wobei das Modul (114) dazu ausgebildet ist, im Energiesparzustand ausschließlich über das Netzwerk mit elektrischer Energie versorgt und betrieben zu werden.

5. Modul (114) nach Anspruch 1, wobei das Modul (114) dazu ausgebildet ist, im Betriebszustand der Automatisierungseinheit (110; 112) über das Automatisierungsnetzwerk empfangene Datenpakete direkt an die Automatisierungseinheit (110; 112) weiterzuleiten.

6. Verfahren zur Steuerung einer modularen Automatisierungseinheit (110; 112) in einem Automatisierungsnetzwerk über ein Modul (114) der Automatisierungseinheit (110; 112), wobei das Modul (114) einen Netzwerkanschluss aufweist, wobei das Modul (114) die Schritte ausführt:
- Empfang eines Wake on LAN Schaltsignals am Netzwerkanschluss über das Automatisierungsnetzwerk,
- als Antwort auf den Empfang des Wake on LAN Schaltsignals , Schalten der Automatisierungseinheit (110; 112) von einem Energiesparzustand in einen Betriebszustand, wobei die Automatisierungseinheit (110; 112) im Energiesparzustand weniger elektrische Energie verbraucht als im Betriebszustand. **dadurch gekennzeichnet, dass** sich die modulare Automatisierungseinheit (110; 112) zuvor Selbstständig in den Energie sparzustand geschaltet hat.

7. Verfahren zur Steuerung einer Automatisierungseinheit (110; 112) eines Automatisierungsnetzwerkes (100), wobei es sich bei der Automatisierungseinheit (110; 112) um ein modulares Gerät handelt, wobei die Automatisierungseinheit (110; 112) Wake on LAN inkompatibel ist, wobei die Automatisierungseinheit (110; 112) ein Modul (114) aufweist, wobei das Modul (114) die Schritte gemäß Anspruch 6 durchführt.

8. Automatisierungseinheit (110; 112) eines Automatisierungsnetzwerkes (100), wobei es sich bei der Automatisierungseinheit (110; 112) um ein modulares Gerät handelt, wobei die Automatisierungseinheit (110; 112) Wake on LAN inkompatibel ist, wobei die Automatisierungseinheit (110; 112) zum Anschluss eines Moduls (114) gemäß einem der Ansprüche 1 bis 5 ausgebildet ist, **dadurch gekennzeichnet, dass** die Automatisierungseinheit ausgebildet ist, zusammen mit dem Modul (114) ein Verfahren nach einem der Ansprüche 6 oder 7 auszuführen.

9. Automatisierungseinheit (110; 112) nach Anspruch 8, wobei die Automatisierungseinheit (110; 112) dazu ausgebildet ist, über das Modul (114) empfangene Datenpakete zu verarbeiten, wobei die Automatisierungseinheit (110; 112) dazu ausgebildet ist, im Falle dessen eines der empfangenen Datenpakete ein Schlaf Schaltsignal aufweist sich als Reaktion auf den Empfang dieses Schlaf Schaltsignals selbst in den Energiesparzustand zu versetzen.

10. Automatisierungseinheit (110; 112) nach Anspruch 8, wobei die Automatisierungseinheit (110; 112) ferner dazu ausgebildet ist, sich selbst in den Energiesparzustand zu versetzen, wenn innerhalb eines vordefinierten Zeitraumes keine vordefinierten Datenpakete durch die Automatisierungseinheit (110; 112) empfangen wurden.

11. Computerprogrammprodukt mit von einem Prozessor ausführbaren Instruktionen zur Durchführung der Verfahrensschritte gemäß den vorigen Ansprüchen 6 bis 7.

## Claims

1. Module (114) for a modular automation unit (110; 112) of an automation network (100), the module (114) having a network connection, the network connection being designed to receive a wake-on LAN switching signal via the automation network, the module (114) being designed to switch the automation unit (110; 112) from an energy-saving state to an operating state in response to the reception of the wake-on LAN switching signal, the automation unit (110; 112) consuming less electrical energy in the energy-saving state than in the operating state, **characterized in that** the modular automation unit (110; 112) is designed to previously independently switch to the energy-saving state.

2. Module (114) according to Claim 1, the module (114) being designed to switch the automation unit (110; 112) from the energy-saving state to the operating state by controlling the voltage supply of the automation unit (110; 112).

3. Module (114) according to Claim 1, the wake-on LAN switching signal being a predefined signal which is either specifically addressed to the automation device or is received as a broadcast.

4. Module (114) according to Claim 1, the module (114) being designed to be supplied with electrical energy and operated solely via the network in the energy-saving state.

5. Module (114) according to Claim 1, the module (114) being designed to directly forward data packets received via the automation network to the automation unit (110; 112) in the operating state of the automation unit (110; 112).

6. Method for controlling a modular automation unit (110; 112) in an automation network via a module (114) of the automation unit (110; 112), the module (114) having a network connection, the module (114) carrying out the steps of:
- receiving a wake-on LAN switching signal at the network connection via the automation network,
- switching the automation unit (110; 112) from an energy-saving state to an operating state in response to the reception of the wake-on LAN switching signal, the automation unit (110; 112) consuming less electrical energy in the energy-saving state than in the operating state,
**characterized in that** the modular automation unit (110; 112) has previously independently switched to the energy-saving state.

7. Method for controlling an automation unit (110; 112) of an automation network (100), the automation unit (110; 112) being a modular device, the automation unit (110; 112) being incompatible with wake-on LAN, the automation unit (110; 112) having a module (114), the module (114) carrying out the steps according to Claim 6.

8. Automation unit (110; 112) of an automation network (100), the automation unit (110; 112) being a modular device, the automation unit (110; 112) being incompatible with wake-on LAN, the automation unit (110; 112) being designed to connect a module (114) according to one of Claims 1 to 5, **characterized in that** the automation unit is designed to carry out a method according to either of Claims 6 and 7 together with the module (114).

9. Automation unit (110; 112) according to Claim 8, the automation unit (110; 112) being designed to process data packets received via the module (114), the automation unit (110; 112) being designed to change itself to the energy-saving state, if its one of the received data packets has a sleep switching signal, in response to the reception of this sleep switching signal.

10. Automation unit (110; 112) according to Claim 8, the automation unit (110; 112) also being designed to change itself to the energy-saving state if no predefined data packets have been received by the automation unit (110; 112) within a predefined period of time.

11. Computer program product having instructions which can be executed by a processor for carrying out the method steps according to the preceding Claims 6 to 7.

## Revendications

1. Module (114) pour une unité (110 ; 112) modulaire d'automatisation d'un réseau (100) d'automatisation, le module (114) ayant un accès au réseau, l'accès au réseau étant constitué pour la réception d'un signal de commutation Wake on LAN par le réseau d'automatisation, le module (114) étant constitué pour, en réponse à la réception du signal de commutation Wake on LAN, faire passer l'unité (110 ; 112) d'automatisation d'un état d'économie d'énergie à un état de fonctionnement, l'unité (110 ; 112) d'automatisation consommant moins d'énergie électrique dans l'état d'économie d'énergie que dans l'état de fonctionnement, **caractérisé en ce que** l'unité (110; 112) modulaire d'automatisation est constituée pour passer d'abord de soi-même dans l'état d'économie d'énergie.

2. Module (114) suivant la revendication 1, dans lequel le module (114) est constitué pour faire passer l'unité (110 ; 112) d'automatisation de l'état d'économie d'énergie à l'état de fonctionnement, en commandant l'alimentation en tension de l'unité (110 ; 112) d'automatisation.

3. Module (114) suivant la revendication 1, dans lequel le signal de commutation Wake on LAN est un signal défini à l'avance, qui est adressé spécialement à l'appareil d'automatisation, ou qui est reçu en radiodiffusion.

4. Module (114) suivant la revendication 1, dans lequel le module (114) est constitué pour être alimenté en énergie électrique et fonctionner dans l'état d'économie d'énergie exclusivement par le réseau.

5. Module (114) suivant la revendication 1, dans lequel le module (114) est constitué pour acheminer directement à l'unité (110 ; 112) d'automatisation, dans l'état de fonctionnement de l'unité (110 ; 112) d'automatisation, des paquets de données reçues par le réseau d'automatisation.

6. Procédé de commande d'une unité (110 ; 112) modulaire d'automatisation dans un réseau d'automatisation par un module (114) de l'unité (110 ; 112) d'automatisation, le module (114) ayant un accès au réseau, dans lequel le module (114) effectue les stades :
- réception d'un signal de commutation Wake on LAN à l'accès au réseau par le réseau d'automatisation,
- en réponse à la réception du signal de commutation Wake on LAN, passage de l'unité (110; 112) d'automatisation d'un état d'économie d'énergie à un état de fonctionnement, l'unité (110; 112) d'automatisation consommant moins d'énergie électrique dans l'état d'économie d'énergie que dans l'état de fonctionnement, **caractérisé en ce que** l'unité (110 ; 112) modulaire d'automatisation s'est mise d'abord de soi-même dans l'état d'économie d'énergie.

7. Procédé de commande d'une unité (110 ; 112) d'automatisation d'un réseau (100) d'automatisation, l'unité (110 ; 112) d'automatisation étant un appareil modulaire, l'unité (110 ; 112) d'automatisation étant incompatible au Wake on LAN, l'unité (110 ; 112) d'automatisation ayant un module (114), le module (114) effectuant les stades suivant la revendication 6.

8. Unité (110; 112) d'automatisation d'un réseau (100) d'automatisation, l'unité (110 ; 112) d'automatisation étant un appareil modulaire, l'unité (110 ; 112) d'automatisation étant incompatible au Wake on LAN, l'unité (110 ; 112) d'automatisation étant constituée pour le raccordement d'un module (114) suivant l'une des revendications 1 à 5, **caractérisée en ce que** l'unité d'automatisation est constituée pour effectuer, ensemble avec le module (114), un procédé suivant l'une des revendications 6 ou 7.

9. L'unité (110; 112) d'automatisation suivant la revendication 8, l'unité (110 ; 112) d'automatisation étant constituée pour traiter des paquets de données reçues par le module (114), l'unité (110 ; 112) d'automatisation étant constituée pour, dans le cas où l'un des paquets de données reçues a un signal de commutation de repos, se mettre soi-même dans l'état d'économie d'énergie, en réaction à la réception de ces signaux de commutation de repos.

10. Unité (110 ; 112) d'automatisation suivant la revendication 8, l'unité (110 ; 112) d'automatisation étant constituée en outre pour se mettre soi-même dans l'état d'économie d'énergie si, dans un laps de temps défini à l'avance, un paquet de données défini à l'avance n'a pas été reçu par l'unité (110 ; 112) d'automatisation.

11. Produit de programme d'ordinateur ayant des instructions pouvant être exécutées par un processeur pour la mise en oeuvre des stades du procédé suivant les revendications 6 à 7 précédentes.
